Europäisches Patentamt

European Patent Office

Office européen des brevets

(19)

(11) Veröffentlichungsnummer: **0 412 288 A1**

# (12) EUROPÄISCHE PATENTANMELDUNG

(21) Anmeldenummer: 90112626.8

(22) Anmeldetag: 03.07.90

(51) Int. Cl.5: **B60T 8/48**, B60K 28/16

(30) Priorität: 09.08.89 DE 3926244

(43) Veröffentlichungstag der Anmeldung:
13.02.91 Patentblatt 91/07

(84) Benannte Vertragsstaaten:
DE FR GB IT

(71) Anmelder: ROBERT BOSCH GMBH
Postfach 10 60 50
D-7000 Stuttgart 10(DE)

(72) Erfinder: Siegel, Heinz, Ing. (grad.)
Hohenloherstrasse 86
D-7000 Stuttgart 40(DE)
Erfinder: Müller, Klaus, Dr. Ing.
Mergentheimer Weg 17
D-7146 Tamm(DE)
Erfinder: Ellendt, Erhard, Dipl.-Ing.
Saarstrasse 24
D-7254 Hemmingen(DE)

(54) Antriebsschlupfbegrenzungseinrichtung in einer hydraulischen Fahrzeug-Bremsanlage.

(57) Die Einrichtung (20) hat wenigstens eine durch einen elektrischen Antriebsmotor (51, 52) antreibbare Zylinder-Kolben-Anordnung (23, 24) zur Erzeugung von Bremsdruck in den Bremsen (7, 8) angetriebener Räder (9, 10). Außerdem weist die Einrichtung Sensoren (34, 35, 36) zur Erfassung des Raddrehverhaltens sowie eine Auswerteschaltung (30) für die Sensorsignale auf. An die Auswerteschaltung (30) ist eine dem jeweiligen Antriebsrad (9, 10) zugeordnete Anzeigeeinrichtung (21) für auftretenden Antriebsschlupf angeschlossen. Ferner ist ein mit einem Wählhebel (40) betätigbarer Sollwertgeber (22) vorgesehen, mit dem der Fahrer entsprechend dem Ausmaß des angezeigten Antriebsschlupfs den dem jeweiligen Antriebsrad (9, 10) zur Schlupfverminderung zuzumessenden Bremsdruck einstellen kann. Dies erfolgt durch Ansteuerung des entsprechenden Antriebsmotors (51, 52) der Kolben-Zylinder-Anordnung (23, 24) mit dem vom Sollwertgeber (22) erzeugten Signal.

Diese manuelle betätigbare Antriebsschlupfbegrenzungseinrichtung (20) ist einfach aufgebaut und besonders für Geländefahrzeuge, Baustellenfahrzeuge oder dergleichen geeignet.

EP 0 412 288 A1

## ANTRIEBSSCHLUPFBEGRENZUNGSEINRICHTUNG IN EINER HYDRAULISCHEN FAHRZEUG-BREMSANLAGE

Stand der Technik

Die Erfindung geht aus von einer Antriebsschlupfbegrenzungseinrichtung nach der Gattung des Hauptanspruchs. Es ist schon eine solche Einrichtung aus der DE-OS 37 07 068 bekannt, bei der in einer Steuereinrichtung die Sensorsignale ausgewertet werden und durch automatische Ansteuerung der Zylinder-Kolben-Anordnung der Bremsdruck in einer Höhe bemessen wird, welche den Antriebsschlupf auf ein zulässiges Maß zurückführt. Dieser Regelvorgang erfordert eine sehr aufwendige Ausgestaltung der Steuereinrichtung, was sich in hohen Herstellungskosten der Antriebsschlupfbegrenzungseinrichtung niederschlägt.

Vorteile der Erfindung

Die erfindungsgemäße Antriebsschlupfbegrenzungseinrichtung mit den kennzeichnenden Merkmalen des Hauptanspruchs hat demgegenüber den Vorteil, daß bei dieser durch die Einschaltung des Fahrers zur anzeigeabhängigen Bremsdruckzumessung eine Steuereinrichtung entbehrlich ist. Dadurch kann die Einrichtung kostengünstig hergestellt werden. Dennoch ist sie trotz ihres einfachen Aufbaues hinsichtlich ihrer Funktion, z. B. für Gelände- oder Baustellenfahrzeuge, völlig ausreichend.

Durch die in den Unteransprüchen aufgeführten Maßnahmen sind vorteilhafte Weiterbildungen und Verbesserungen der im Hauptanspruch angegebenen Antriebsschlupfbegrenzungseinrichtung möglich.

Mit der im Anspruch 2 gekennzeichneten Ausgestaltung der Erfindung ist auf einfache Weise eine Darstellung der Größe des Antriebsschlupfes möglich, z. B. anhand der Helligkeit der Lampe, deren Einschaltfrequenz oder in der Anzahl der eingeschalteten Lampen oder Leuchtdioden.

In den Ansprüchen 3 und 4 sind Ausgestaltungen für den Sollwertgeber aufgeführt, der eine bezüglich der Radseite, an der Schlupf auftritt, sinnfällige Zuordnung der Betätigung erlaubt und mit einfachen Mitteln das Bremssignal erzeugt.

Der Anspruch 5 offenbart eine vorteilhafte Maßnahme zur Signalumformung bei der Verwendung preisgünstiger, einfach steuerbarer Gleichstrommotoren.

Mit der im Anspruch 6 gekennzeichneten Weiterbildung der Erfindung wird dem Fahrer eine Information dargeboten, aus der er die Belastung der Bremsen beim Antriebsschlupfbegrenzungsbetrieb erkennen und bei drohender Überhitzung entsprechend reagieren kann.

Zeichnung

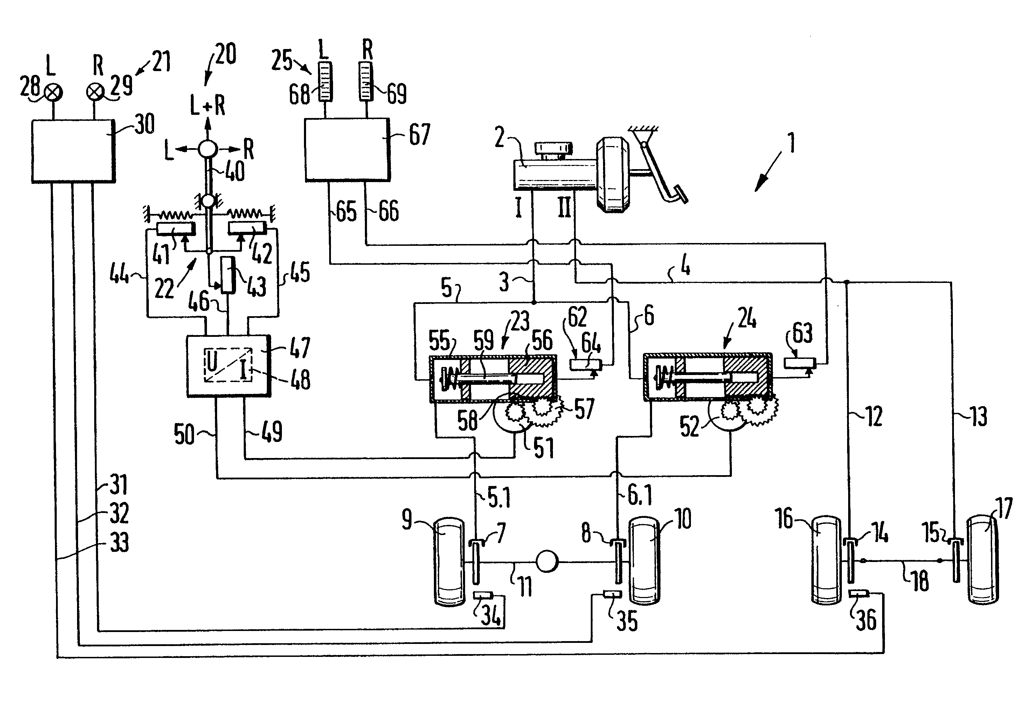

Ein Ausführungsbeispiel der Erfindung ist in der Zeichnung anhand eines Schemas einer hydraulischen Fahrzeug-Bremsanlage vereinfacht dargestellt und in der nachfolgenden Beschreibung näher erläutert.

Beschreibung des Ausführungsbeispiels

Die in der Zeichnung im Schema widergegebene hydraulische Fahrzeug-Bremsanlage 1 hat einen pedalbetätigbaren Hauptbremszylinder 2, an den eine Hauptbremsleitung 3 eines Bremskreises I und eine Hauptbremsleitung 4 eines Bremskreises II angeschlossen ist. Die Hauptbremsleitung 3 ist in Bremsleitungen 5 und 5.1 sowie 6 und 6.1 verzweigt, welche zu hydraulischen Bremsen 7 und 8 der Räder 9 und 10 einer angetriebenen Fahrzeugachse 11 führen. Die Hauptbremsleitung 4 führt dagegen zu Bremsleitungen 12 und 13, die an die hydraulischen Bremsen 14 und 15 nicht angetriebener Räder 16 und 17 einer zweiten Fahrzeugachse 18 angeschlossen sind. Darüber hinaus weist die hydraulische Fahrzeug-Bremsanlage 1 eine Antriebsschlupfbegrenzungseinrichtung 20 auf. Diese besteht aus einer Anzeigeeinrichtung 21 für an den Antriebsrädern 9 und/oder 10 auftretenden Antriebsschlupf, einem Sollwertgeber 22 zum Einstellen von dem jeweiligen Antriebsrad 9, 10 zuzumessendem, in einer Kolben-Zylinder-Anordnung 23 bzw. 24 zur Schlupfverminderung erzeugtem Bremsdruck sowie eine Anzeigeeinrichtung 25 für die Höhe des Bremsdrucks.

Die Anzeigeeinrichtung 21 hat eine dem linken Antriebsrad 9 der angetriebenen Achse 11 zugeordnete Lampe 28 sowie eine dem rechten Antriebsrad 10 zugeordnete Lampe 29. In der Zeichnung ist diese Zuordnung zu den Fahrzeugseiten mit den Buchstaben L für links und R für rechts angegeben. Die Ansteuerung der Lampen 28 und 29 erfolgt durch eine Auswerteschaltung 30, an die über die Signalleitungen 31, 32 und 33 den beiden Antriebsrädern 9 und 10 der angetriebenen Achse 11 sowie einem nicht angetriebenen Rad 16 der anderen Achse 18 zugeordnete Sensoren 34, 35 und 36 angeschlossen sind. Mit diesen Sensoren 34, 35 und 36 ist das Drehverhalten der erwähnten Räder 9, 10 und 16 erfaßbar. In der Auswerteschaltung 30 wird durch den Vergleich der von den Sensoren 34, 35 und 36 abgegebenen Signale Antriebsschlupf errechnet und entsprechend dem Ausmaß des ermittel ten Antriebsschlupfs am Antriebsrad 9 und/oder am Antriebsrad 10 die zugeordnete Lampe 28 bzw. 29 angesteuert. Dabei kann das vom Antriebsschlupf qualitativ abhängige Signal der Auswerteschaltung 30 dazu benutzt werden, um die Lampe in ihrer Helligkeit oder in ihrer Einschaltfrequenz zu steuern. Anstelle der Lampen 28 und 29 können auch nicht dargestellte Lampen- oder Leuchtdiodenketten oder eine Flüssigkristallanzeige Verwendung finden.

Die Anzeigeeinrichtung 21 vermittelt also dem Fahrer die Information, an welchem Antriebsrad 9 und/oder 10 und in welcher Intensität Antriebsschlupf auftritt.

Der Sollwertgeber 22 weist einen Wählhebel 40 auf, welcher mit dem Abgriff von drei Potentiometern 41, 42 und 43 verbunden ist. Von den drei Potentiometern 41, 42 und 43 führen Signalleitungen 44, 45 und 46 zu einer Steuerschaltung 47. Diese ist mit einem Wandler 48 versehen zum Umformen von an den Potentiometern 41, 42 und 43 abgegriffenen Spannungssignalen in Stromsignale. Von der Steuerschaltung 47 führen zwei Signalleitungen 49 und 50 zu als permanentmagneterregte Gleichstrommotoren ausgebildete Antriebsmotoren 51 und 52 der Kolben-Zylinder-Anordnungen 23 und 24. Da diese baugleich ausgebildet sind, wird nachfolgend lediglich die in der Bremsleitung 5 und 5.1 liegende Anordnung 23 beschrieben:

Die Kolben-Zylinder-Anordnung 23 hat ein Gehäuse 55 mit einem darin angeordneten, längsverschiebbaren Zylinder 56. Zum Erzeugen einer reversiblen Hubbewegung des Zylinders 56 dient ein mit dem elektrischen Antriebsmotor 51 verbundenes Zahnradgetriebe 57, welches in eine längsverlaufende Verzahnung 58 des Zylinders eingreift. Der mit Bremsflüssigkeit gefüllte Zylinder 56 steht mit einem gleichachsig verlaufenden, als Rohr ausgebildeten Plungerkolben 59 der Kolben-Zylinder-Anordnung 23 in Verbindung. Der Plungerkolben 59 ist in geringem Maß längsverschiebbar im Gehäuse 55 geführt. Er verschließt am Beginn eines Arbeitshubes des Zylinders 56 die zum Hauptbremszylinder 2 führende Bremsleitung 5. Mit der im Zylinder 56 befindlichen Bremsflüssigkeit kann nun im weiteren Verlauf des Arbeitshubes durch die Bremsleitung 5.1 in der hydraulischen Bremse 7 des Antriebsrades 9 Bremsdruck aufgebaut werden.

Jede Kolben-Zylinder-Anordnung 23 bzw. 24 wirkt mit einem Signalgeber 62 bzw. 63 zusammen. Dieser besteht aus einem Potentiometer 64, dessen Abgriff mit dem Zylinder 56 der jeweiligen Anordnung 23 bzw. 24 verbunden ist. Vom Signalgeber 62 und 63 führt je eine Signalleitung 65 und 66 zu einer Auswerteschaltung 67. Diese steuert je eine dem linken Antriebsrad 9 und dem rechten Antriebsrad 10 zugeordnete, säulenförmig ausgebildete Lampenkette 68 und 69 an. Durch die Erfassung der Stellung des jeweiligen Zylinders 56 mittels des Potentiometers 64 wird aufgrund der Druck-Volumen-Kennlinie der Bremsanlage 1 ein vom in die zugehörige Bremse 7 bzw. 8 eingesteuerten Bremsdruck abhängiges Signal gewonnen und optisch durch entsprechende Ansteuerung der Lampenkette 68 und/oder 69 dem Fahrer angezeigt.

Während des normalen Fahrbetriebs kann der Fahrer durch Betätigen des Hauptbremszylinders 2 unter Erzeugung von Bremsdruck in den Bremsen 7, 8, 14 und 15 das Fahrzeug verzögern und gegebenenfalls zum Stillstand bringen. Während dieses Bremsbetriebes sind die Kolben-Zylinder-Anordnungen 23 und 24 nicht am Bremsvorgang beteiligt. Dagegen wird von der Anzeigeeinrichtung 21 aufgrund der ständigen Überwachung des Raddrehverhaltens an den Antriebsrädern 9 und 10 auftretender Antriebsschlupf beim Anfahren und Beschleunigen des Fahrzeugs bei niedrigen Geschwindigkeiten angezeigt. Wird beispielsweise an der Lampe 28 Antriebsschlupf am linken Antriebsrad 9 angezeigt, so bewegt der Fahrer den Wählhebel 40 in Richtung des Pfeiles L. Am Potentiometer 42 wird entsprechend der Hebeleinstellung ein Spannungssignal erzeugt und mittels der Signalleitung 45 auf die Steuerschaltung 47 übertragen, in der es durch den Wandler 48 in ein Stromsignal umgewandelt wird. Mit diesem Stromsignal wird durch die Steuerleitung 49 der elektrische Antriebsmotor 51 der Kolben-Zylinder-Anordnung 23 angesteuert. Der aus seiner Ausgangsstellung verschobene Zylinder 56 erzeugt bei gleichzeitiger Absperrung der Bremsleitung 5 Bremsdruck in der hydraulischen Bremse 7, bis der Antriebsschlupf beseitigt ist.

Entsprechend dem Ausmaß der Zylinder-Verschiebung wird am Potentiometer 64 ein Signal abgegriffen und mit der Signalleitung 65 zur Auswerteschaltung 67 übertragen und in der Lampenkette 68 der Anzeigeeinrichtung 25 angezeigt. Während dieses Bremsvorganges kann der Fahrer das Ausmaß des Antriebsschlupfes an der Anzeigeeinrichtung 21 und die Höhe des erzeugten Bremsdruckes an der Anzeigeeinrichtung 25 verfolgen. Dabei kann der Fahrer mittels des Wählhebels 40 korrigierend auf den Bremsdruck Einfluß nehmen. Nach ausreichender Einsteuerung von Bremsdruck kann der Fahrer den Wählhebel 40 in seine Neutralstellung und den Abgriff des Potentiometers 42 in seine Ausgangsstellung zurückführen. Auch beim Loslassen des Wählhebels 40 in ausgelenkter Stellung wird dieser selbsttätig in seine Neutralstellung zurückgeführt, was eine Rückstellung des Zylinders 56 der Kolben-Zylinder-Anordnung 23 in seine Ausgangsstellung bewirkt. In entsprechender Weise kann der Fahrer Antriebsschlupf am Antriebsrad 10 durch Bewegen des Wählhebels 40 in Richtung des Pfeiles R beseitigen. Bei Antriebsschlupf an beiden Antriebsrädern 9 und 10 bewegt der Fahrer den Wählhebel 40 in Richtung des Pfeiles L + R. Bei in unterschiedlichem Ausmaß an den Antriebsrädern 9 und 10 auftretendem Antriebsschlupf kann der Fahrer nach der Schlupfanzeige in der Anzeigeeinrichtung 21 den Wählhebel 40 des Sollwertgebers 22 in der Weise auslenken, daß der Bremsdruck in entsprechend der Anforderung ausreichender Höhe in der jeweiligen Bremse 7 oder 8 erzeugt wird.

Bei schwierigen Fahrsituationen mit länger anhaltendem Schlupf hilft die Anzeigeeinrichtung 25 dem Fahrer zu erkennen, ob durch eine starke Belastung der Bremsen 7, 8 mit Bremsdruck eine Überhitzung droht. Schließlich können in der Antriebsschlupfbegrenzungseinrichtung 20 vorgesehene Maßnahmen sicherstellen, daß der Fahrer die Einrichtung lediglich im Stillstand des Fahrzeugs z. B. durch Knopfdruck einschalten kann.

**Ansprüche**

1. Antriebsschlupfbegrenzungseinrichtung (20) in einer hydraulischen Fahrzeug-Bremsanlage (1) mit einer jedem Antriebsrad (9, 10) zugeordneten hydraulischen Radbremse (7, 8), mit wenigstens einer durch einen elektrischen Antriebsmotor (51, 52) antreibbaren Zylinder-Kolben-Anordnung (23, 24) zur Erzeugung von Bremsdruck, mit Mitteln, welche den Antriebsmotor im Antriebsschlupfbegrenzungsbetrieb mit Strom versorgen, sowie mit Sensoren (34, 35, 36) zur Erfassung des Raddrehverhaltens und mit einer Auswerteschaltung (30) für die Sensorsignale, dadurch gekennzeichnet, daß an die Auswerteschaltung (30) eine dem jeweiligen Antriebsrad (9, 10) zugeordnete Anzeigeeinrichtung (21, 28, 29) für auftretenden Antriebsschlupf angeschlossen ist und die den elektrischen Antriebsmotor (51, 52) an Strom legenden Mittel mit einem Sollwertgeber (22) verbunden sind, mit dem vom Fahrer entsprechend dem Ausmaß des Antriebsschlupfs der dem jeweiligen Antriebsrad zur Schlupfverminderung zuzumessende Bremsdruck einstellbar ist.

2. Einrichtung nach Anspruch 1, dadurch gekennzeichnet, daß die Auswerteschaltung (30) ein vom Antriebsschlupf qualitativ abhängiges Signal an die Anzeigeeinrichtung (21) abzugeben vermag, welche eine dem jeweiligen Antriebsrad (9, 10) zugeordnete Lampe (28, 29), eine Lampen- oder Leuchtdiodenkette, eine Flüssigkristallanzeige oder dergleichen aufweist.

3. Einrichtung nach Anspruch 1, dadurch gekennzeichnet, daß der Sollwertgeber (22) wenigstens ein dem jeweiligen Antriebsrad (9, 10) zugeordnetes Potentiometer (41, 42) und einen gemeinsamen Wählhebel (40) aufweist, mit dem der Potentiometerabgriff einstellbar und nach dem Loslassen des Hebels selbsttätig in seine Ausgangsstellung zurückführbar ist.

4. Einrichtung nach Anspruch 3, dadurch gekennzeichnet, daß der Sollwertgeber (22) mit einem beiden Antriebsrädern (9, 10) einer Antriebsachse (11) des Fahrzeugs zugeordneten, mit dem Wählhebel (40) einstellbaren potentiometer (43) ausgestattet ist.

5. Einrichtung nach Anspruch 3 oder 4, dadurch gekennzeichnet, daß das vom Potentiometer (41, 42, 43) abgegriffene Spannungssignal in einem Wandler (48) in ein dem entsprechenden, als permanentmagneterregter Gleichstrommotor ausgebildeten Antriebsmotor (51, 52) der Zylinder-Kolben-Anordnung (23, 24) zuführbares Stromsignal umformbar ist.

6. Einrichtung nach Anspruch 1, dadurch gekennzeichnet, daß die Zylinder-Kolben-Anordnung (23, 24) mit einem Signalgeber (62, 63) zusammenwirkt, der ein dem erzeugten Bremsdruck entsprechendes optisches Signal in einer weiteren Anzeigeeinrichtung (25) hervorruft.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3730927 (BOSCH)<br>* Spalte 5, Zeile 62 - Spalte 6, Zeile 61; Figur 3 *<br>--- | 1 | B60T8/48<br>B60K28/16 |
| A | DE-A-3622479 (TEVES)<br>* Spalte 3, Zeilen 14 - 25; Figur 3 *<br>--- | 1 | |
| A | DE-B-1006795 (STILL)<br>* das ganze Dokument *<br>----- | 1 | |

**RECHERCHIERTE SACHGEBIETE (Int. Cl.5 )**

B60T
B60K

Der vorliegende Recherchenbericht wurde für alle Patentansprüche erstellt

| Recherchenort | Abschlußdatum der Recherche | Prüfer |
|---|---|---|
| BERLIN | 29 OKTOBER 1990 | BLURTON M.D. |